# FASCICULE DE BREVET EUROPEEN

(11) **EP 0 783 981 B1**
(45) Date de publication et mention de la délivrance du brevet: **11.10.2000**
(21) Numéro de dépôt: 96120870.9
(22) Date de dépôt: 24.12.1996
(51) Int. Cl.: B60C 15/024, B60B 21/10

(54) **Ensemble pneumatique-jante pour véhicule "Poids-Lourds"**
Reifen-/Felge-Einheit für LKW
Tyre and rim assembly for heavy-duty vehicle

(30) Priorité: 15.01.1996 FR 9600519
(43) Date de publication de la demande: 16.07.1997
(73) Titulaire: COMPAGNIE GENERALE DES ETABLISSEMENTS MICHELIN-MICHELIN & CIE, 63040 Clermont-Ferrand Cédex (FR)
(72) Inventeur: Cauquot, Georges, 63360 Gerzat (FR); Lambert, Guy-Noel, 63100 Clermont-Ferrand (FR); Ott, Guy, 63400 Chamalieres (FR)
(74) Mandataire: Devaux, Edmond-Yves

(56) Documents cités:
- EP-A- 0 125 047
- AU-B- 521 469
- DE-A- 3 626 123
- DE-U- 8 702 348
- FR-A- 2 224 313
- FR-A- 2 337 059

## Description

La présente invention concerne un ensemble roulant composé d'une jante et d'un pneumatique de type "Poids-Lourds" à l'intérieur duquel est placé éventuellement un dispositif de soutien de la bande de roulement, cet ensemble étant prévu pour des roulages pouvant être à pression faible ou nulle. Elle concerne aussi la jante en elle-même.

Certaines conditions de roulage, et en particulier les roulages dits "tous terrains", sur des sols non entretenus, de toute nature, et parsemés d'obstacles aussi différents par leur nature que par leur taille, rendent les ensembles décrits très fragiles par manque d'endurance à pression de faible valeur, en particulier du pneumatique desdits ensembles, manque d'endurance se traduisant d'une part par des faiblesses des flancs et/ou bourrelets du pneumatique au niveau des jonctions avec les tringles et le sommet, et d'autre part par des faiblesses de flancs suite aux agressions tels que les chocs, les perforations, les pincements dus à la présence sur le sol d'objets divers.

Le brevet français 2 224 313, en vue de conserver la flexibilité d'un pneumatique pour véhicule de tourisme, préconise un ensemble formé d'un pneumatique radial dont l'armature de carcasse a une fibre moyenne dont la courbe d'équilibre naturelle est tangente aux tringles de bourrelets, et d'une jante de montage dont le rebord est composé d'une partie en S prolongeant axialement à l'extérieur le siège de jante, ladite partie étant axialement et radialement prolongée à l'extérieur par une partie tronconique, l'inclinaison de la génératrice tronconique étant comprise entre 20° et 60° et sensiblement parallèle au segment situé en regard de la fibre moyenne de l'armature de carcasse. Une incurvation cylindrique ou crochet termine axialement à l'extérieur le rebord.
Afin d'améliorer l'endurance du pneumatique, l'ensemble roulant, conforme à l'invention et composé d'un pneumatique à armature de carcasse radiale dont la courbe d'équilibre de la fibre moyenne est tangente aux tringles de bourrelets, et d'une jante comprenant axialement à l'extérieur de chaque siège un rebord formé d'une partie tronconique ayant une génératrice faisant avec une parallèle avec l'axe de rotation un angle compris entre 20° et 60°, réunie axialement à l'intérieur au siège de jante par une partie en S et ayant axialement à l'extérieur un crochet, est caractérisé en ce que, vus en section méridienne,
- le pneumatique est monté sur une jante dont la largeur axiale A est au plus égale à 0,65 fois la largeur axiale maximale S du pneumatique, gonflé à sa pression d'utilisation,
- la jante de montage possède, de part et d'autre du plan équatorial, un rebord dont la partie tronconique est prolongée axialement à l'extérieur par une portion cylindrique, elle-même prolongée par le crochet.
- la hauteur dudit rebord H étant réduite par rapport à la hauteur du rebord d'une jante normalisée de même largeur axiale A, et étant une fonction linéaire de ladite largeur A, fonction de la forme H = a.A, avec a compris entre 0,105 et 0,115.

Dans le cas du pneumatique conforme à l'invention et destiné à rouler sur des sols de types routier autant que "hors la route", il faut entendre par pression d'utilisation la pression recommandée pour le roulage sur route, ladite pression pouvant être effectivement fortement abaissée dans le cas du roulage "hors la route". De même, il faut entendre par portion cylindrique une portion dont la génératrice fait avec une parallèle à l'axe de rotation un angle compris entre + 5° et - 5°.

De manière préférentielle, la largeur axiale A sera au plus égale à 0,60 fois la largeur axiale maximale S du pneumatique.

De manière avantageuse, la partie cylindrique aura une largeur axiale au moins égale à la largeur axiale de la partie tronconique, et la somme de ces largeurs sera comprise entre 10% et 20% de la largeur A de la jante.

Chaque partie tronconique de la jante est reliée à chaque siège de jante par une courbe en S, dont les branches peuvent être de longueurs et courbures différentes. De préférence, cette courbe de raccordement en S a une branche circulaire tangente au siège de bourrelet et l'autre branche circulaire de même rayon tangente à la partie tronconique du rebord. La jonction de la partie tronconique à la portion cylindrique se fait préférentiellement par un rayon de raccordement supérieur au rayon commun des branches circulaires de la partie en S, et avantageusement compris entre 8 et 12 mm, ce qui permet un meilleur déroulement du profil méridien de l'armature de carcasse dans le cas de roulage à pression nulle ou faible.

Dans la majorité des cas d'utilisation, il sera suffisant que la largeur de la portion cylindrique soit égale à la largeur de la partie tronconique, l'élargissement de ladite portion cylindrique au delà de cette valeur ne permettant pas d'améliorer le rapport performance sur prix.

De manière avantageuse, le pneumatique aura, comme connu en soi, chaque flanc muni intérieurement, entre le profil méridien de l'armature de carcasse et la couche intérieure de caoutchouc imperméable aux gaz de gonflage, d'un renfort de mélange caoutchouteux sous forme de croissant, l'épaisseur dudit renfort étant nulle dans la zone des bourrelets sensiblement au niveau des points de tangence de l'armature de carcasse avec les tringles, nulle dans la zone de sommet sensiblement au niveau des extrémités de l'armature de sommet, et maximale approximativement au niveau de la largeur axiale maximale de l'armature de carcasse pour atteindre une valeur pouvant être comprise entre 3 et 6 mm.

Il est de même avantageux que la bande de roulement du pneumatique ait une largeur axiale au moins égale à 0.8 fois la largeur axiale maximale S du pneumatique gonflé à sa pression normale d'utilisation.

L'invention sera mieux comprise à l'aide de la description qui suit et qui se réfère au dessin illustrant à titre non limitatif un exemple d'exécution et sur lequel,
- la figure 1 représente schématiquement, en section méridienne, le profil méridien radialement extérieur de la jante utilisée pour l'ensemble ;

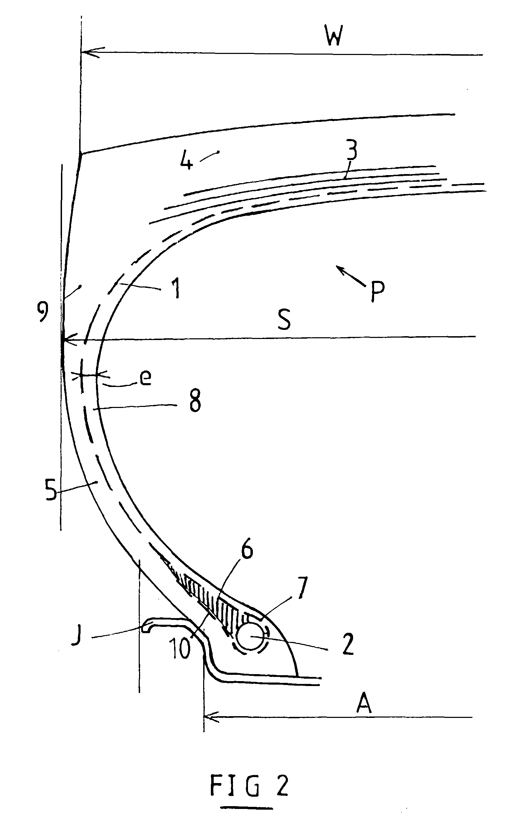

- la figure 2 représente schématiquement l'ensemble formé par la jante de la figure 1 et un pneumatique adapté à ladite jante.
- la figure 3 représente schématiquement l'ensemble de la figure 2, dans lequel est inséré un dispositif de soutien de bande de roulement

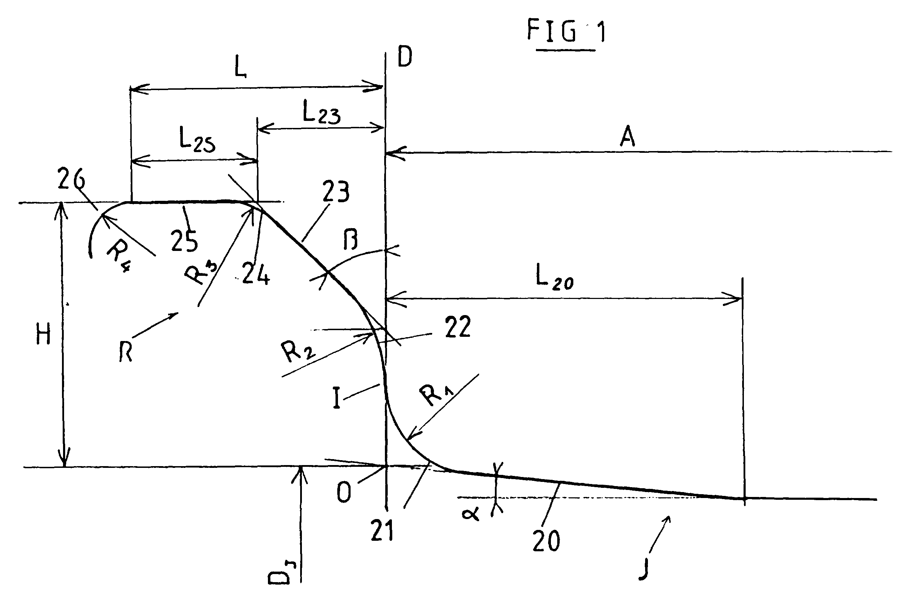

Le profil méridien de la jante J dite 9.00-27, conforme à l'invention, symétrique par rapport au plan équatorial (non montré) de l'ensemble (fig. 1), comprend de chaque côté dudit plan un siège de jante (20) tronconique dont la génératrice fait avec la direction de l'axe de rotation un angle α de 5° ± 1°. Le siège (20) de largeur L₂₀, égale à 36 mm, est prolongé axialement à l'extérieur par un arrondi circulaire convexe (21) de rayon R₁ égal à 8 mm. Ledit arrondi (21) forme avec un deuxième arrondi concave (22) de rayon R₂ égal aussi à 8 mm la portion en S de jonction du siège (20) avec la partie tronconique (23). Les deux arrondis (21) et (22) sont tangents l'un à l'autre au point I d'inflexion, point I par lequel passe une droite D perpendiculaire à l'axe de rotation. Cette droite D définit avec la génératrice du siège (20) un point d'intersection O. Par convention, la largeur axiale A de la jante J est la distance axiale séparant les deux points O de part et d'autre du plan équatorial, égale à 228,6 mm dans le cas décrit (9"). De même, ce point O est le point de référence de la mesure du diamètre nominal D_{J} de la jante J, égal à 685,8 mm (27"). Prolongeant axialement à l'extérieur le deuxième arrondi (22) et tangente audit arrondi, la partie tronconique (23) a une génératrice faisant avec la droite D un angle β égal à 45°. Cette partie tronconique (23) est aussi tangente à l'arrondi (24), qui la prolonge axialement à l'extérieur, de rayon R₃ égal à 10 mm dans l'exemple montré, arrondi (24) qui assure la jonction avec la portion cylindrique (25) dont la génératrice est parallèle à l'axe de rotation. Le rebord de jante (R) est alors terminé axialement à l'extérieur par un crochet circulaire (26) de rayon R₄ égal à 4 mm, tangent à la génératrice (25). La largeur axiale L₂₅ de ladite génératrice cylindrique, mesurée entre le point de tangence avec le crochet (26) et le point d'intersection de ladite génératrice (25) avec la génératrice tronconique (23), est égale à 12 mm, alors que la largeur axiale L₂₃ de la génératrice tronconique (23) mesurée entre le point d'intersection de ladite génératrice (23) avec la génératrice (25) et le point d'intersection de la génératrice (23) avec la droite D est aussi égale à 12 mm. La somme de ces deux largeurs L₂ est alors égale à 10,5% de la largeur A de la jante J. Quant à la hauteur H du rebord de jante, elle est plus faible que la hauteur correspondante d'une jante normalisée de même largeur et égale à 25,4 mm. Ladite valeur est déduite de la fonction linéaire H = 0,1111.A, alors que la fonction donnant la hauteur du rebord d'une jante normalisée ( ETRTO ) à siège plat ou incliné à 5° par rapport à la largeur de jante peut s'écrire H ∼ 0,201.A + 2,32, ce qui donne, pour la même largeur de jante A, une hauteur H de 48,3 mm.

Le pneumatique P de dimension 405 / 80 R 27 comprend une armature de carcasse radiale (1), une armature de sommet (3) surmontée d'une bande de roulement (4). La fibre moyenne du profil méridien de l'armature de carcasse (1), formée d'une seule nappe de câbles métalliques vient tangenter au point (7) la tringle (2) pour s'enrouler autour d'elle et former un retournement (10). Il faut entendre par fibre moyenne d'une nappe unique de câbles radiaux, vue en section méridienne, l'axe de symétrie d'un câble de ladite nappe. Entre le retournement (10) et la nappe de carcasse (1), la tringle (2) est surmontée, comme de coutume, d'un profilé (6) de caoutchouc de forme sensiblement triangulaire. Le profil méridien d'armature de carcasse (1) radialement au-dessus du point (7) de tangence, est sensiblement parallèle au profil méridien de la partie tronconique (23) de la jante J de montage, pour se prolonger radialement jusqu'à tangenter le profil méridien de l'armature de sommet (3), formée de deux nappes de travail de câbles métalliques croisés d'une nappe à la suivante en formant avec la direction circonférentielle des angles pouvant être compris entre 10° et 45°, et d'une nappe de protection de câbles dits élastiques.

La nappe de carcasse (1) est recouverte à l'extérieur de la gomme de flanc (5) et se trouve protégée axialement à l'intérieur par un profilé de caoutchouc (8) en forme de croissant. Ce renfort intérieur, dont l'épaisseur e, maximale au niveau de la largeur axiale maximale de la nappe de carcasse et égale à 4,5 mm, devient nulle aux jonctions respectivement avec le profil méridien de l'armature de sommet (3) et avec la tringle (2), permet en combinaison avec la tension de la nappe de carcasse (1),( sous l'effet de la pression de gonflage), abaissée par rapport à celle de la nappe de carcasse d'un pneumatique courant, une meilleure protection des flancs (9) contre les chocs, les perforations, les coupures et leurs conséquences, en particulier la dégradation de la nappe de carcasse sous-jacente (1). Une largeur W de bande roulement, égale à 0,95 fois la largeur axiale maximale S complète les caractéristiques ci-dessus pour améliorer la résistance des flancs du pneumatique.

Le rapport de la largeur A de la jante J sur la largeur axiale maximale du pneumatique S est égal à 0,56, ce qui procure une longueur de flanc très supérieure à celle d'un pneumatique courant, et en conséquence une longévité en roulage sous faible pression nettement améliorée. Cette amélioration semble être due, selon la demanderesse, au fait que le profil méridien de l'armature de carcasse (1), dans la zone comprise entre le point de tangence (7) avec la tringle (2) et le point du profilé (6), au dessus de la tringle (2), radialement le plus éloigné de l'axe de rotation, ne se positionne pas au-delà de la droite sensiblement parallèle au plan équatorial, droite ayant le point de la jante J le plus éloigné axialement dudit plan ; le rebord R de jante comprenant après la partie tronconique (23) une portion cylindrique ou quasi-cylindrique (25) permet une telle structure.

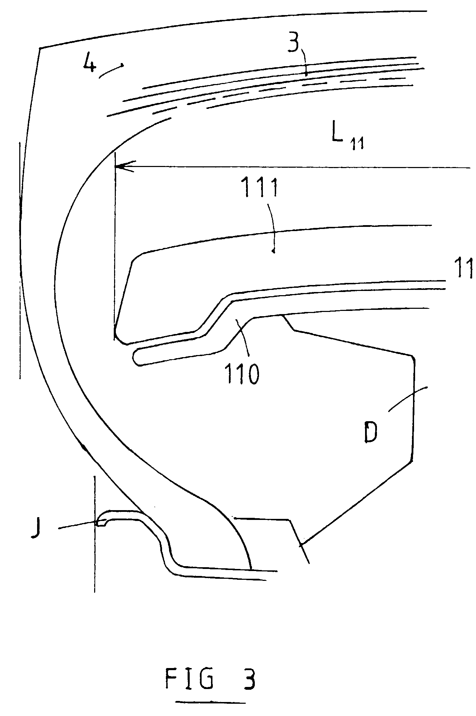

L'ensemble pneumatique P - jante J ainsi constitué est muni d'un dispositif de soutien de bande de roulement, qui peut être quelconque, en allant du "boudin mousse" à l'anneau de soutien métallique multipartite. Préférentiellement, l'anneau de soutien (11) utilisé (fig.3) sera constitué de deux matériaux, en particulier d'un support métallique (110) sur lequel peut tourner librement au moyen d'un lubrifiant une chape en caoutchouc (111). Un tel dispositif (11) est décrit dans la demande française 2 707 923. Dans l'application considérée, utilisant une jante étroite J par rapport à la largeur axiale maximale S du pneumatique, l'anneau de soutien (11) peut posséder une chape en caoutchouc (111) ayant une largeur axiale maximale L₁₁ au moins égale à 0,9 fois la largeur axiale maximale de la jante J (distance axiale séparant les deux points de la jante axialement les plus éloignés du plan équatorial), ce qui, en roulage sur sols accidentés à pression faible ou nulle, cas où la bande de roulement prend appui sur l'anneau de soutien, permet une bonne protection de la jante J contre les chocs et pincements sans cependant trop pénaliser la bande de roulement (4).

## Revendications

1. Ensemble roulant, composé d'un pneumatique P à armature de carcasse radiale (1) dont la courbe d'équilibre de la fibre moyenne est tangente aux tringles (2) de bourrelets, et d'une jante J comprenant axialement à l'extérieur de chaque siège (20) un rebord R formé d'une partie tronconique (23) ayant une génératrice faisant avec une parallèle avec l'axe de rotation un angle compris entre 20° et 60°, réunie axialement à l'intérieur au siège de jante par une partie en S et ayant axialement à l'extérieur un crochet (26), caractérisé en ce que, vus en section méridienne,
- le pneumatique P est monté sur une jante J dont la largeur axiale A est au plus égale à 0,65 fois la largeur axiale maximale S du pneumatique, gonflé à sa pression d'utilisation,
- la jante de montage J possède, de part et d'autre du plan équatorial, un rebord R dont la partie tronconique (23) est prolongée axialement à l'extérieur par une portion cylindrique (25), elle-même prolongée par le crochet (26).
- la hauteur dudit rebord H étant réduite par rapport à la hauteur du rebord d'une jante normalisée de même largeur axiale A, et étant une fonction linéaire de ladite largeur A, fonction de la forme H = a.A, avec a compris entre 0,105 et 0,115.

2. Ensemble selon la revendication 1, caractérisé en ce que la largeur axiale A de la jante est au plus égale à 0,60 fois la largeur axiale maximale S du pneumatique.

3. Ensemble selon l'une des revendications 1 à 2, caractérisé en ce que la portion cylindrique (25) a une largeur axiale L₂₅ au moins égale à la largeur axiale L₂₃ de la partie tronconique (23), la somme L₂ de ces largeurs étant comprise entre 10% et 20% de la largeur de la jante A.

4. Ensemble selon l'une des revendications 1 à 3, caractérisé en ce que la jonction de la partie tronconique (23) à la portion cylindrique (25) se fait préférentiellement par un rayon de raccordement R₃ supérieur au rayon commun R₁, R₂ des branches circulaires de la partie en S qui relie la partie tronconique (23) au siège de jante (20), et avantageusement compris entre 8 et 12 mm.

5. Ensemble selon l'une des revendications 1 à 4, caractérisé en ce que le pneumatique P a chaque flanc (9) muni intérieurement, entre le profil méridien de l'armature de carcasse (1) et la couche intérieure de caoutchouc imperméable aux gaz de gonflage, d'un renfort de mélange caoutchouteux (8) sous forme de croissant, l'épaisseur e dudit renfort étant nulle dans la zone des bourrelets sensiblement au niveau des points de tangence (7) de l'armature de carcasse (1) avec les tringles (2), nulle dans la zone de sommet (3) sensiblement au niveau des extrémités de l'armature de sommet (3), et maximale approximativement au niveau de la largeur axiale maximale de l'armature de carcasse (1) pour atteindre une valeur pouvant être comprise entre 3 et 6 mm.

6. Ensemble selon la revendication 5, caractérisé en ce que la bande de roulement (4) du pneumatique P a une largeur axiale W au moins égale à 0,8 fois la largeur axiale maximale S du pneumatique gonflé à sa pression normale d'utilisation.

7. Ensemble selon l'une des revendications 1 à 6, caractérisé en ce qu'il comprend en outre un dispositif de soutien de bande de roulement (11), constitué d'un support métallique (110) sur lequel peut tourner librement, au moyen d'un lubrifiant, une chape en caoutchouc (111), ladite chape ayant une largeur axiale L₁₁ au moins égale à 0,9 fois la largeur axiale maximale de la jante J.

8. Jante J pour un ensemble selon l'une des revendications 1 à 7, caractérisée en ce qu'elle possède, de part et d'autre du plan équatorial, axialement à l'extérieur de chaque siège (20), un rebord R formé d'une partie tronconique (23) ayant une génératrice faisant avec une parallèle avec l'axe de rotation un angle compris entre 20° et 60°, réunie axialement à l'intérieur au siège de jante (20) par une partie en S formée de deux branches circulaires , et prolongée axialement à l'extérieur par une portion cylindrique (25), elle-même prolongée par un crochet (26), ladite partie cylindrique (25) ayant une largeur axiale L₂₅ au moins égale à la largeur axiale L₂₃ de la partie tronconique (23), et la somme L₂ de ces largeurs étant comprise entre 10% et 20% de la largeur de la jante, la hauteur H dudit rebord étant réduite par rapport à la hauteur du rebord d'une jante normalisée de même largeur axiale A, et étant une fonction linéaire de ladite largeur A, fonction de la forme H = a.A, avec a compris entre 0,105 et 0,115.

9. Jante selon la revendication 8, caractérisée en ce que la partie cylindrique (25) a une largeur axiale L₂₅ égale à la largeur axiale L₂₃ de la partie tronconique (23).

## Patentansprüche

1. Rollende Baugruppe, die aus einem Reifen P mit einer radialen Karkassenbewehrung (1), deren Gleichgewichtskurve der Mittelfaser eine Tangente an die Wulstkerne (2) der Wülste ist, und aus einer Felge J zusammengesetzt ist, die axial auf der Außenseite eines jeden Sitzes (20) einen Randumschlag R aufweist, der aus einem kegelstumpfförmigen Teil (23) gebildet ist, das zu einer Parallelen zur Drehachse einen Winkel bildet, der zwischen 20° und 60° liegt, axial auf der Innenseite mit einem S-förmigen Teil vereint ist und axial auf der Außenseite einen Haken (26) aufweist, dadurch gekennzeichnet, daß, im Meridianschnitt gesehen,
- der Reifen P auf einer Felge J montiert ist, deren axiale Breite A höchstens gleich dem 0,65-fachen der maximalen, axialen Breite S des Reifens ist, der auf seinen Gebrauchsdruck aufgepumpt ist, und
- die Montagefelge J beiderseits der Äquatorialebene einen Randumschlag R besitzt, dessen kegelstumpfförmiger Teil (23) axial nach außen um einen zylindrischen Abschnitt (25) verlängert ist, der seinerseits durch den Haken (26) verlängert ist, wobei
- die Höhe H des genannten Randumschlags in Bezug auf die Höhe des Randumschlags einer genormten Felge mit derselben axialen Breite A verringert ist und eine lineare Funktion der genannten Breite A ist, und zwar eine Funktion mit der Form H = a · A. wobei a zwischen 0,105 und 0,115 liegt.

2. Baugruppe nach Anspruch 1, dadurch gekennzeichent, daß die axiale Breite A der Felge höchstens gleich ist dem 0,60-fachen der maximalen, axialen Breite S des Reifens ist.

3. Baugruppe nach einem der Ansprüche 1 bis 2, dadurch gekennzeichnet, daß der zylindrische Abschnitt (25) eine axiale Breite L₂₅ aufweist, die mindestens gleich ist der axialen Breite L₂₃ des kegelstumpfförmigen Teils (23), wobei die Summe L₂ dieser Breiten zwischen 10% und 20% der Breite A der Felge liegt.

4. Baugruppe nach einem der Ansprüche 1 bis 3, dadurch gekennzeichnet, daß die Verbindung des kegelstumpfförmigen Teils (23) mit dem zylindrischen Abschnitt (25) bevorzugt durch einen Verbindungsradius R₃ erfolgt, der gößer ist als ein gemeinsamer Radius R₁, R₂ der kreisförmigen Arme des S-förmigen Teils, der den kegelstumpfförmigen Teil (23) mit dem Felgensitz (20) verbindet, und bevorzugt zwischen 8 und 12 mm liegt.

5. Baugruppe nach einem der Ansprüche 1 bis 4, dadurch gekennzeichnet, daß beim Reifen P jede Flanke (9) auf der Innenseite zwischen dem Meridianprofil der Karkassenbewehrung (1) und der Innenlage aus Gummi, die für das Aufpumpgas undurchlässig ist, mit einer Verstärkung (8) aus Gummimischung in Form eines Hörnchens bewehrt ist, wobei die Dicke e der genannten Verstärkung in der Zone der Wülste im wesentlichen in Höhe der Tangentenpunkte (7) der Karkassenbewehrung (1) an den Wulstkernen (2) null ist, in der Zone des Scheitels (3) im wesentlichen in Höhe der Enden der Scheitelbewehrung (3) null ist und etwa auf Höhe der maximalen, axialen Breite der Karkassenbewehrung (1) maximal ist, um einen Wert zu erreichen, der zwischen 3 und 6 mm liegt.

6. Baugruppe nach Anspruch 6, dadurch gekennzeichnet, daß die Lauffläche (4) des Reifens P eine axiale Breite W aufweist, die mindestens gleich ist dem 0,8-fachen der maximalen, axialen Breite S des Reifens, der auf seinen normalen Gebrauchsdruck aufgepumpt ist.

7. Baugruppe nach einem der Ansprüche 1 bis 6, dadurch gekennzeichnet, daß sie außerdem eine Vorrichtung (11) zum Unterstützen der Lauffläche aufweist, die aus einem Träger (110) aus Metall gebildet ist, auf dem sich mittels eines Schmierstoffs eine Gummihaube (111) frei drehen kann, wobei die genannte Haube eine axiale Breite L₁₁ aufweist, die mindestens das 0,9-fache der maximalen, axialen Breite der Felge J beträgt.

8. Felge J für eine Baugruppe nach einem der Ansprüche 1 bis 7, dadurch gekennzeichnet, daß sie beiderseits der Äquatorialebene axial auf der Außenseite eines jeden Sitzes (20) einen Randumschlag R aufweist, der aus einem kegelstumpfförmigen Teil (23) gebildet ist, der eine Erzeugende aufweist, die zu einer Parallelen zur Drehachse einen Winkel bildet, der zwischen 20° und 60° liegt, der axial auf der Innenseite mit dem Felgensitz (20) durch einen S-förmigen Teil vereint ist, der aus zwei kreisförmigen Armen gebildet ist, und der axial auf der Außenseite durch einen zylindrischen Abschnitt (25) verlängert ist, der seinerseits durch einen Haken (26) verlängert ist, wobei der genannte zylindrische Teil (25) eine axiale Breite L₂₅ aufweist, die mindestens gleich ist der axialen Breite L₂₃ der kegelstumpfförmigen Teils (23), und die Summe L₂ dieser Breiten zwischen 10% und 20% der Breite der Felge liegt, und wobei die Höhe H des genannten Randumschlags in Bezug auf die Höhe des Randumschlags einer genormten Felge für dieselbe axiale Breite A verringert ist und eine lineare Funktion der genannten Breite A ist, und zwar eine Funktion der Form H = a · A, wobei a zwischen 0,105 und 0,115 liegt.

9. Felge nach Anspruch 8, dadurch gekennzeichnet, daß der zylindrische Teil (25) eine axiale Breite L₂₅ aufweist, die gleich ist der axialen Breite L₂₃ des kegelstumpfförmigen Teils (23).

## Claims

1. A rolling assembly, composed of a tyre P with radial carcass reinforcement (1), the equilibrium curve of the centre line of which is at a tangent to the bead wires (2), and of a rim J comprising axially to the outside of each seat (20) a flange R formed of a frustoconical part (23) having a generatrix forming an angle of between 20° and 60° with a line parallel to the axis of rotation, joined axially to the inside to the rim seat by an S-shaped part and having a hook (26) axially to the outside, characterised in that, viewed in meridian section,
- the tyre P is mounted on a rim J, the axial width A of which is at most equal to 0.65 times the maximum axial width S of the tyre, inflated to its use pressure,
- the mounting rim J has, on either side of the equatorial plane, a flange R, the frustoconical part (23) of which is extended axially to the outside by a cylindrical portion (25), which in turn is extended by the hook (26),
- the height of said flange H being reduced relative to the height of the flange of a standardised rim of the same axial width A, and being a linear function of said width A, a function of the form H = a.A, a being between 0.105 and 0.115.

2. An assembly according to Claim 1, characterised in that the axial width A of the rim is at most equal to 0.60 times the maximum axial width S of the tyre.

3. An assembly according to one of Claims 1 or 2, characterised in that the cylindrical portion (25) has an axial width L₂₅ at least equal to the axial width L₂₃ of the frustoconical part (23), the total L₂ of these widths being between 10% and 20% of the width A of the rim.

4. An assembly according to one of Claims 1 to 3, characterised in that the join of the frustoconical part (23) to the cylindrical portion (25) is preferably effected by means of a connecting radius R₃ greater than the common radius R₁, R₂ of the circular branches of the S-shaped part which connects the frustoconical part (23) to the rim seat (20), and is advantageously between 8 and 12 mm.

5. An assembly according to one of Claims 1 to 4, characterised in that the tyre P has each sidewall (9) provided internally, between the meridian profile of the carcass reinforcement (1) and the inner layer of rubber impermeable to the inflation gases, by a reinforcement (8) of rubber mix in the shape of a crescent, the thickness e of said reinforcement being zero in the zone of the beads substantially level with the points of tangency (7) of the carcass reinforcement (1) with the bead wires (2), zero in the crown zone (3) substantially at the level of the ends of the crown reinforcement (3), and at a maximum approximately at the level of the maximum axial width of the carcass reinforcement (1) to reach a value which may be between 3 and 6 mm.

6. An assembly according to Claim 5, characterised in that the tread (4) of the tyre P has an axial width W equal to at least 0.8 times the maximum axial width S of the tyre inflated to its normal use pressure.

7. An assembly according to one of Claims 1 to 6, characterised in that it furthermore comprises a supporting device (11) for the tread, formed of a metal support (110) on which a rubber cap (111) can turn freely by means of a lubricant, said cap having an axial width L₁₁ at least equal to 0.9 times the maximum axial width of the rim J.

8. A rim J for an assembly according to one of Claims 1 to 7, characterised in that it has, on either side of the equatorial plane, axially to the outside of each seat (20), a flange R formed of a frustoconical part (23) having a generatrix forming an angle of between 20° and 60° with a line parallel to the axis of rotation, joined axially to the inside to the rim seat (20) by an S-shaped part formed of two circular branches, and extended axially to the outside by a cylindrical portion (25), which in turn is extended by a hook (26), said cylindrical part (25) having an axial width L₂₅ at least equal to the axial width L₂₃ of the frustoconical part (23), and the total L₂ of these widths being between 10% and 20% of the width of the rim, the height H of said flange being reduced relative to the height of the flange of a standardised rim of the same axial width A, and being a linear function of said width A, a function of the form H = a.A, a being between 0.105 and 0.115.

9. A rim according to Claim 8, characterised in that the cylindrical part (25) has an axial width L₂₅ equal to the axial width L₂₃ of the frustoconical part (23).
